# DEMANDE DE BREVET EUROPEEN

(11) **EP 2 403 213 A1**
(43) Date de publication de la demande: **04.01.2012**
(21) Numéro de dépôt: 11171573.6
(22) Date de dépôt: 27.06.2011
(51) Int. Cl.: H04L 29/06, H04L 12/56

(54) **Methode et systeme pour l'ajout d'un record-route en-tete dans une requete de signalisation**

(30) Priorité: 29.06.2010 FR 1055214
(71) Demandeur: FRANCE TELECOM, 75015 Paris (FR)
(72) Inventeur: Tronet, Sarah, 22300 Lannion (FR); Levee, Francois-Joseph, 22550 Henanbihen (FR)
(74) Mandataire: Cabinet Plasseraud

(57) **Abrégé**

L'invention se rapporte à un traitement de données pour l'ajout d'un en-tête dans une requête de signalisation, pour la transmission de ladite requête de signalisation sur un réseau de télécommunication. Le réseau de télécommunication comporte un serveur informatique, dit serveur principal. En particulier, le serveur principal comporte un module de gestion et un module de routage. L'ajout de l'en-tête est réalisé de manière dynamique par ledit module de gestion.

## Description

La présente invention vise un traitement de données pour la communication de données sur un réseau de télécommunication.

En particulier, l'invention vise un traitement de données pour l'ajout d'un en-tête dans une requête de signalisation, notamment une requête SIP (pour « Session Initiation Protocol »). On appelle requête SIP une requête selon le protocole d'ouverture de session SIP.

L'en-tête est ajouté de manière dynamique. On appelle « ajout dynamique » d'un en-tête le fait de pouvoir ajouter ou non un en-tête en fonction d'une requête, pour pouvoir mettre le serveur principal en coupure de flux de manière sélective.

La décision d'ajouter ou non un en-tête à une requête est prise en fonction d'un critère prédéterminé, qui provient par exemple d'une table de routage.

Le réseau de télécommunication utilise par exemple comme protocole de communication le Protocole Internet (IP). Il s'agit d'un protocole de niveau 3 (couche réseau) dans le modèle d'interconnexion de systèmes ouverts (OSI).

Aujourd'hui, les communications de type voix sur réseau IP (ou « VoIP » ci-après), notamment, sont basées sur l'utilisation du protocole d'ouverture de session SIP (« Session Initiation Protocol ») dans un réseau de télécommunication comportant un coeur de réseau de type sous-système multimédia IP (ou « IMS » ci-après).

On appelle « coeur de réseau » la partie principale d'un réseau de télécommunication, qui concentre et transporte les flux de données entre des réseaux affluents. En d'autres termes, l'IMS joue le rôle de couche logique intermédiaire entre, d'un côté, des terminaux et/ou des réseaux de transport orientés IP et, de l'autre côté, des applications de service de télécommunication (notamment VoIP). Les applications de service mises en oeuvre dans cette infrastructure sont hébergées sur des serveurs informatiques, dits serveurs d'applications, invoqués par le coeur de réseau IMS.

L'architecture des différentes applications de service invoquées par le coeur de réseau peut amener à utiliser un serveur informatique comme serveur principal en charge de distribuer des requêtes provenant de l'IMS vers d'autres serveurs d'applications. Le serveur principal peut être vu comme un unique point d'entrée entre le coeur de réseau et les serveurs d'applications.

Une grande partie des serveurs d'applications utilisant le protocole SIP sont développés à partir d'une technologie appelée « SipServlet », qui a été standardisée dans le cadre de la requête de spécification Java JSR 289. La technologie « SipServlet » permet de faciliter le développement des applications de service en offrant une interface de programmation (API) simple basée sur le protocole SIP. En outre, la technologie « SipServlet » permet de guider l'exécution des applications par les serveurs d'applications.

Un serveur principal comporte généralement, en plus des applications de service hébergées par le serveur, un module de routage, appelé module application routeur, qui est chargé de déterminer comment enchainer les applications de service, c'est-à-dire de déterminer quelles applications doivent être invoquées et dans quel ordre.

Le serveur d'application comporte en outre un module de gestion, appelée conteneur, qui est chargé de gérer les couches protocolaires, d'interroger le module de routage, de distribuer les requêtes entre les applications de service et d'exécuter ces applications de service.

En fonction des contraintes réseau, on peut souhaiter que le serveur principal soit toujours, du point de vue du coeur de réseau IMS, le seul point d'entrée vers les serveurs d'application. Cela permet d'avoir un coeur de réseau simple, qui n'a pas besoin de pouvoir accepter des requêtes provenant des serveurs d'applications.

Cependant, il peut être intéressant, notamment pour augmenter les performances du serveur principal, de permettre au serveur principal de ne pas être en coupure de tous les flux, c'est-à-dire de permettre à des requêtes de transiter directement entre les serveurs d'application et le coeur de réseau IMS sans passer par le serveur principal une fois que la session d'appel SIP est établie.

Lorsqu'on veut permettre au serveur principal d'être en coupure de flux, on utilise un champ d'en-tête SIP, appelé header Record-Route. Le champ Record-Route permet de mémoriser un chemin pour faciliter l'acheminement des requêtes suivantes de la même session. Deux techniques permettent actuellement d'ajouter cet en-tête.

Selon une première technique, le serveur principal comporte un module supplémentaire spécifique, appelé module SipServlet Proxy.

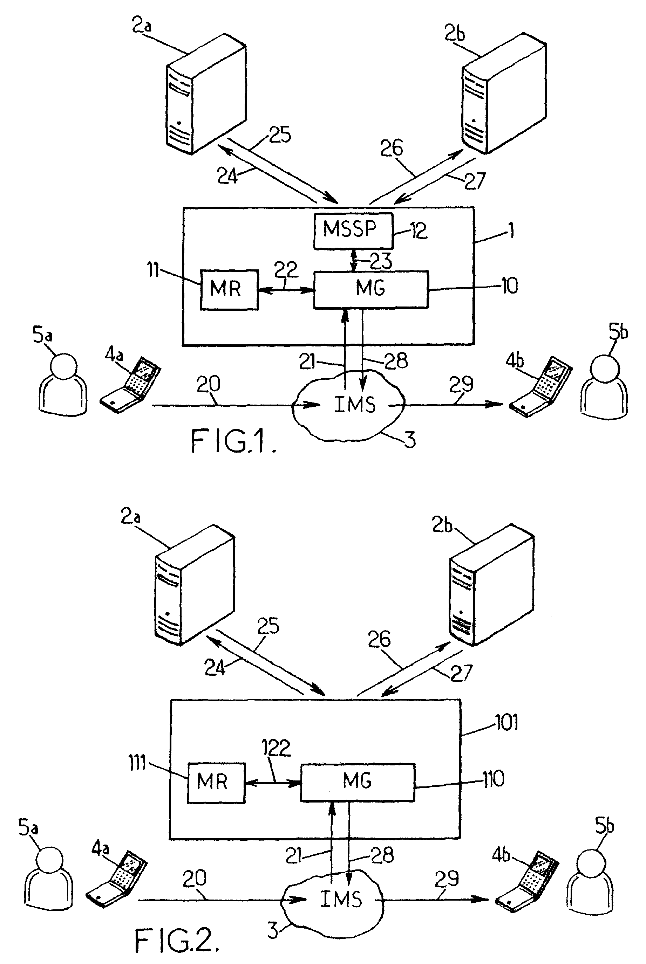

La figure 1 illustre cette première technique en représentant un réseau de télécommunication comportant un serveur principal 1, un premier serveur d'applications 2a, un deuxième serveur d'applications 2b, un coeur de réseau IMS 3, un premier client SIP 4a, et un deuxième client SIP 4b.

L'implémentation du serveur principal 1 est basée sur la norme SipServlet 1.1. Le serveur principal 1 comporte un module de gestion 10, un module de routage 11, et un module SipServlet Proxy 12. Le serveur principal 1 est connecté aux premier et deuxième serveurs d'applications 2a, 2b. Le serveur principal 1 est également connecté au coeur de réseau IMS 3.

Le coeur de réseau IMS 3 est connecté aux premier et deuxième clients SIP 4a, 4b, qui sont par exemple des téléphones mobiles ou d'autres types de terminaux utilisateurs. Le premier client SIP 4a est associé à un premier utilisateur 5a. Le deuxième client SIP 4b est associé à un deuxième utilisateur 5b.

Lorsque le premier utilisateur 5a souhaite initier une communication avec le deuxième utilisateur 5b, le premier client SIP 4a émet à destination du coeur de réseau IMS 3 une requête R_{SIP}, appelée requête SIP INVITE, symbolisée par la flèche 20. Cette requête R_{SIP} comporte divers champs SIP, contenant notamment des informations relatives à l'émetteur (le premier client SIP 4a), au destinataire (le deuxième client SIP 4b), aux codecs utilisés, aux numéros du ou des port(s) associés au service, et aux adresses IP de l'émetteur et du destinataire. La requête R_{SIP} contient également des informations de routage permettant à la requête 20 d'arriver au coeur de réseau IMS 3.

Le coeur de réseau IMS 3 reçoit cette requête R_{SIP}, et y ajoute des informations de routage, pour que la requête R_{SIP} passe par le serveur principal et repasse par lui au retour. Puis, le coeur de réseau IMS 3 émet la requête R_{SIP} à destination du serveur principal 1, comme symbolisé par la flèche 21.

En réponse à la réception de la requête R_{SIP}, le module de gestion 10 du serveur principal 1 interroge le module de routage 11, comme symbolisé par la flèche 22, pour déterminer quelle application le module de gestion 10 doit invoquer. Lors de l'interrogation, le module de gestion 10 transmet par exemple au module de routage 11 la requête R_{SIP}, ainsi que des informations de contexte, pour indiquer notamment s'il s'agit d'une première requête, ou, dans le cas contraire, quel est l'état de la requête. Dans l'exemple, la requête R_{SIP} est une première requête. L'application à invoquer peut être une application hébergée par le serveur principal 1 lui-même, dite application interne, ou une application hébergée par un des serveurs d'applications 2a, 2b, dite application externe.

En réponse à cette interrogation, le module de routage 11 transmet des informations de routage au module de gestion 10, également symbolisées par la flèche 22. Ces informations comprennent le nom de l'application à invoquer, l'identité de l'abonné pour qui l'application sélectionnée va être invoquée, la zone de routage dans laquelle l'application est mémorisée, une route optionnelle, locale ou distante, un modificateur de route indiquant au module de gestion comment interpréter la route, et des informations d'état optionnelles.

Lorsque le module de routage 11 est configuré pour que le serveur principal 1 reste sur le chemin des requêtes suivantes du dialogue, via l'utilisation de l'en-tête Record-Route, la réponse du module de routage 11 comprend, comme application à invoquer, l'application SipServlet Proxy, contenue dans le module SipServlet Proxy 12.

Dans ce cas, le module de gestion 10 transmet la requête R_{SIP} au module SipServlet Proxy 12, comme symbolisé par la flèche 23. Le module 12 ajoute l'en-tête Record-Route à la requête R_{SIP}, puis renvoie la requête R_{SIP} au module de gestion 10. Le module de gestion 10 interroge alors de nouveau le module de routage 11, qui lui répond, par exemple, que l'application suivante à invoquer se trouve dans le premier serveur d'applications 2a. Le module de gestion 10 transmet alors la requête R_{SIP}, avec l'en-tête Record-Route, au premier serveur d'applications 2a, comme symbolisé par la flèche 24.

Le premier serveur d'applications 2a reçoit la requête R_{SIP} et la traite. Dans l'exemple de l'application de service VoIP, le traitement peut par exemple comprendre une première étape de décision de rejet, pour décider si la requête R_{SIP} doit être acceptée ou rejetée. Et, lorsque la requête R_{SIP} est acceptée, le traitement peut comprendre une deuxième étape de modification du destinataire 4b, dans laquelle la requête R_{SIP} est modifiée pour changer des informations relatives au destinataire 4b. Cette deuxième étape est par exemple réalisée lorsque le deuxième utilisateur 5b a paramétré un transfert de sa ligne sur une messagerie.

Lorsque le traitement est terminé, le premier serveur d'application 2a émet la requête R_{SIP} traitée à destination du serveur principal 1, comme symbolisé par la flèche 25. Le module de gestion 10 reçoit la requête R_{SIP}, puis interroge de nouveau le module de routage 11. Lorsque le module de routage 11 est configuré pour que le serveur principal 1 reste encore sur le chemin des requêtes suivantes du dialogue, le module de routage 11 répond au module de gestion 10 en lui indiquant d'invoquer l'application SipServlet Proxy.

Comme décrit précédemment, le module de gestion 10 transmet alors la requête R_{SIP} au module SipServlet Proxy 12, qui ajoute l'en-tête, puis retransmet la requête R_{SIP} au module de gestion 10. Le module de gestion 10 réinterroge alors le module de routage 11, qui lui indique par exemple d'invoquer une autre application de service, hébergée dans le deuxième serveur d'applications 2b. Le module de gestion 10 transmet donc la requête R_{SIP} au deuxième module d'applications 2b, comme symbolisé par la flèche 26.

Le deuxième serveur d'applications 2b reçoit la requête R_{SIP} et la traite. Le traitement est de préférence complémentaire au traitement réalisé par le premier serveur d'applications 2a. Le traitement réalisé par le deuxième serveur d'applications 2b peut par exemple comprendre la génération d'un appel supplémentaire, pour avertir le deuxième utilisateur 5b, sur un autre terminal lui appartenant, qu'il reçoit un appel du premier utilisateur 5a. Lorsque le traitement est terminé, le deuxième serveur d'application 2b renvoie la requête R_{SIP} au serveur principal 1, comme symbolisé par la flèche 27.

De manière similaire, après avoir reçu la requête R_{SIP}, le module de gestion 10 interroge le module de routage 11, qui, s'il est configuré pour que les requêtes suivantes transitent toujours par le serveur principal 1, lui indique d'invoquer l'application SipServlet Proxy.

Après émission de la requête R_{SIP} à destination du module SipServlet Proxy 12, puis renvoi de cette requête R_{SIP}, avec ajout d'un en-tête, au module de gestion 10, le module de gestion 10 réinterroge le module de routage 11, qui lui indique par exemple qu'il n'y a plus d'application à invoquer.

Le module de gestion 10 émet alors la requête R_{SIP} à destination du coeur de réseau IMS 3, comme symbolisé par la flèche 28. Le coeur de réseau IMS 3 transmet alors la requête R_{SIP} à destination du deuxième client SIP 4b, comme symbolisé par la flèche 29.

La communication est ainsi établie entre les premier et deuxième clients SIP 4a, 4b, et les premier et deuxième utilisateurs 5a, 5b peuvent dialoguer via leurs téléphones mobiles 4a, 4b respectifs.

Ainsi, pour un routage simple d'une requête SIP via deux applications externes, on doit ajouter trois interrogations du module de routage 11 et trois invocations de l'application SipServlet Proxy, simplement pour assurer le routage des requêtes R_{SIP} suivantes via le serveur principal 1.

En conséquence, cette première technique pour gérer la coupure de flux du serveur principal 1 nécessite un grand nombre d'étapes supplémentaires et réduit donc les performances du serveur principal 1.

Selon une deuxième technique, le serveur principal peut comporter un module de gestion capable d'ajouter un en-tête Record-Route. Avec cette technique, le serveur principal n'a pas besoin de comporter un module SipServlet Proxy, ce qui permet d'éviter les étapes supplémentaires d'interrogation du module de routage et d'invocation du module Sip Servlet Proxy. Cependant, le module de gestion ne peut ajouter l'en-tête Record-Route que de manière statique. On entend par le terme statique que, lorsque le module de gestion ajoute des en-têtes, il les ajoute sur toutes les requêtes sans distinction. Ce module de gestion a donc un fonctionnement de type tout ou rien, c'est-à-dire que soit il n'ajoute l'en-tête sur aucune requête, et le serveur principal n'est plus en coupure des flux une fois les sessions établies, soit il ajoute l'en-tête sur toutes les requêtes, et le serveur principal est en coupure de tous les flux même une fois que les sessions sont établies.

Cette deuxième technique présente l'inconvénient de ne pas pouvoir réaliser une coupure de flux sélective, en fonction des requêtes.

La présente invention vient améliorer la situation.

A cet effet, l'invention propose un procédé de traitement de données de télécommunication, dans lequel un serveur d'un réseau de télécommunication ajoute un en-tête dans une requête de signalisation, pour la transmission de ladite requête de signalisation sur le réseau de télécommunication. Le serveur comporte un module de routage, apte à déterminer des informations de routage relatives à des requêtes de signalisation, et un module de gestion, apte à interroger le module de routage et à distribuer des requêtes de signalisation en fonction d'instructions reçues par le module de routage.

Le procédé comprend en particulier des étapes :
a) recevoir, dans le module de gestion, une requête de signalisation provenant du réseau de télécommunication,
b) déterminer, dans le module de routage, si un en-tête doit être ajouté dans la requête de signalisation, en fonction d'un critère prédéterminé auprès dudit module de routage, et, si un en-tête doit être ajouté,
c) mettre en oeuvre, dans le module de gestion, un ajout dynamique de l'en-tête dans la requête de signalisation.

La gestion de la coupure de flux du serveur est ainsi réalisée de manière dynamique, c'est-à-dire sélective, en limitant le nombre d'étapes nécessaires, ce qui permet d'augmenter les performances du serveur.

En d'autres termes, le serveur permet ainsi, par la collaboration particulière entre son module de gestion et son module de routage, la gestion dynamique de la coupure de flux du serveur sans nécessiter l'utilisation d'un module supplémentaire.

De préférence, l'étape a) comprend une opération d'interrogation du module de routage par le module de gestion, suite à la réception de la requête de signalisation. Et l'étape b) comprend une opération de réponse du module de routage au module de gestion, la réponse comportant une information relative au fait qu'un en-tête doit être ajouté ou non à la requête de signalisation.

Les informations transmises au module de routage lors de l'interrogation comprennent par exemple la requête, ainsi que des informations de contexte, telles que l'état de la requête de signalisation.

Avantageusement, la réponse du module de routage au module de gestion comprend, outre l'information relative au fait qu'un en-tête doit être ajouté ou non à la requête de signalisation, des informations de routage.

Le module de routage est ainsi apte à décider de l'ajout d'un en-tête au même titre qu'il décide du choix de l'enchainement des applications.

L'information relative au fait qu'un en-tête doit être ajouté ou non à la requête de signalisation comprend par exemple un paramètre pouvant prendre deux valeurs, une première valeur indiquant qu'un en-tête doit être ajouté dans la requête de signalisation, et une deuxième valeur indiquant qu'aucun en-tête ne doit être ajouté dans la requête de signalisation.

Dans ce mode de réalisation de l'invention, l'étape c) est réalisée lorsque la valeur du paramètre transmis par le module de routage à l'étape b) est la première valeur.

Après l'étape c), le module de gestion transmet la requête de signalisation conformément aux instructions de routage reçues du module de routage.

Un seul échange entre le module de gestion et le module de routage permet ainsi de déterminer, d'une part, si un en-tête doit être ajouté, et, d'autre part, à quel destinataire la requête de signalisation doit être transmise.

L'en-tête ajouté est par exemple de type Record-Route, la requête de signalisation étant de type SIP INVITE.

Les étapes du procédé peuvent être réalisées par un programme informatique.

L'invention vise donc également un programme informatique comportant des instructions pour la mise en oeuvre du procédé lorsqu'il est exécuté par un processeur.

Le procédé peut être mis en oeuvre par un serveur particulier. L'invention vise donc également un serveur apte à ajouter un en-tête dans une requête de signalisation pour la transmission de ladite requête de signalisation sur un réseau de télécommunication comprenant le serveur. Le serveur comporte un module de routage, apte à déterminer des informations de routage relatives à des requêtes de signalisation, et un module de gestion, apte à interroger le module de routage et à distribuer des requêtes de signalisation en fonction d'instructions reçues par le module de routage. Le serveur comprend en outre :
- des moyens de réception pour recevoir, dans le module de gestion, une requête de signalisation provenant du réseau de télécommunication,
- des moyens de détermination pour déterminer, dans le module de routage, si un en-tête doit être ajouté dans la requête de signalisation, en fonction d'un critère prédéterminé auprès dudit module de routage, et
- des moyens d'ajout d'un en-tête pour mettre en oeuvre, dans le module de gestion, un ajout dynamique de l'en-tête dans la requête de signalisation.

Un tel serveur est capable de gérer sa coupure de flux de manière dynamique, c'est-à-dire sélective, avec un nombre limité d'étapes nécessaires. Le serveur est en particulier destiné à être intégré dans un système comportant plusieurs serveurs.

L'invention vise donc également un système comportant un serveur tel que défini précédemment, dit serveur principal, et un ensemble de serveurs supplémentaires, dit serveurs d'applications, lesdits serveurs d'applications étant connectés au serveur principal.

D'autres caractéristiques et avantages de l'invention apparaîtront encore à la lecture de la description qui va suivre. Celle-ci est purement illustrative et doit être lue en regard des dessins annexés sur lesquels :
- la Figure 1 est un schéma fonctionnel montrant un réseau de télécommunication comportant un serveur principal selon l'art antérieur ;
- la Figure 2 est un schéma fonctionnel montrant un réseau de télécommunication comportant un serveur principal selon un mode de réalisation de l'invention ;
- la Figure 3 est un organigramme illustrant les étapes d'un procédé d'ajout d'un en-tête dans une requête SIP selon un mode de réalisation de l'invention, cet organigramme pouvant représenter l'algorithme général du programme informatique au sens de l'invention ; et
- la Figure 4 est un organigramme illustrant les étapes d'un procédé de mise en communication d'un premier utilisateur avec un deuxième utilisateur, le procédé de mise en communication comprenant les étapes du procédé de la figure 3.

La figure 2 représente un réseau de télécommunication comportant un serveur informatique remplissant une fonction de serveur principal 101, deux serveurs informatiques remplissant des fonctions de premier serveur d'applications 2a, et de deuxième serveur d'applications 2b, respectivement, un coeur de réseau IMS 3, un premier client SIP 4a, et un deuxième client SIP 4b.

Le serveur principal 100 comporte un module de gestion 110 et un module de routage 111. Le module de routage 111 est chargé de déterminer comment enchainer les applications de service, c'est-à-dire de déterminer quelles applications doivent être invoquées et dans quel ordre. Le module de gestion 110 est chargé de d'interroger le module de routage 111, et de distribuer les requêtes entre les applications de service en fonction d'instructions reçues du module de routage 111. Le module de gestion 110 peut également être chargé de gérer les couches protocolaires, et d'exécuter des applications de service.

L'implémentation du serveur principal 100 est basée sur la norme SipServlet 1.1, modifiée pour permettre de réaliser les fonctions supplémentaires décrites en détails plus loin. Le serveur principal 100 est connecté aux premier et deuxième serveurs d'applications 2a, 2b. Le serveur principal 100 est également connecté au coeur de réseau IMS 3.

Lorsqu'on veut permettre au serveur principal d'être en coupure de flux, on utilise un champ d'en-tête SIP, appelé header Record-Route. Pour remplir le champ d'en-tête SIP d'une requête, le module de gestion 110 comporte une fonction d'ajout d'en-tête, permettant d'ajouter un en-tête dans la requête. La fonction d'ajout d'en-tête du module de gestion 110 est commandée par le module de rouage 111. En d'autres termes, le module de routage 111 est apte à décider de l'ajout d'un en-tête Record-Route au même titre qu'il décide du choix de l'enchaînement des applications.

Le coeur de réseau IMS 3 est connecté aux premier et deuxième clients SIP 4a, 4b, qui sont par exemple des téléphones mobiles ou d'autres types de terminaux utilisateurs. Le premier client SIP 4a est associé à un premier utilisateur 5a. Le deuxième client SIP 4b est associé à un deuxième utilisateur 5b.

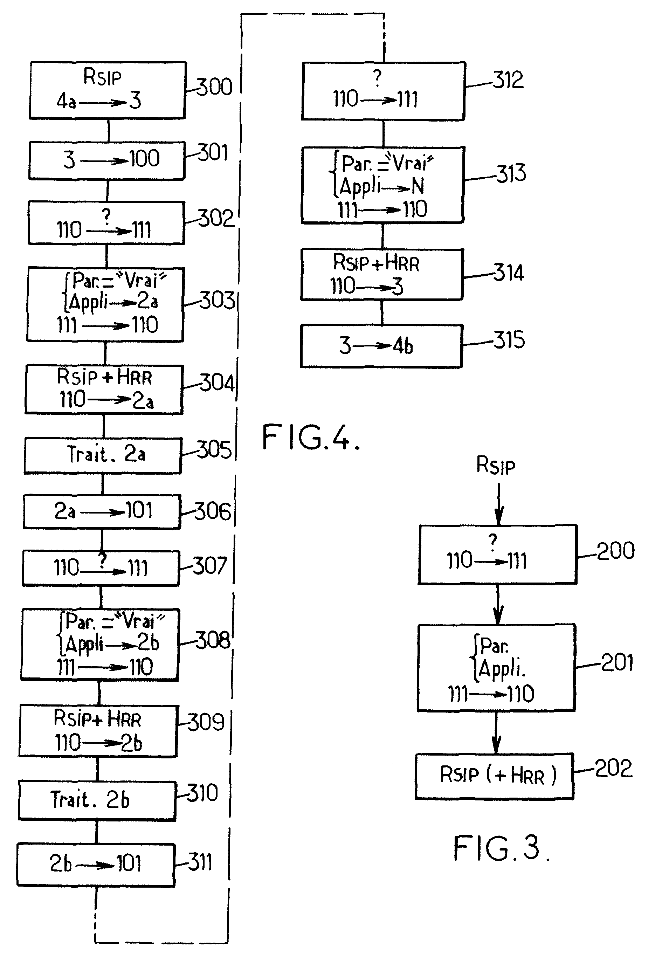

En se référant à la figure 3, on décrit maintenant les étapes d'un procédé d'ajout d'un en-tête Record-Route dans une requête R_{SIP} de type SIP INVITE. Le procédé est exécuté par le serveur principal 101. Le procédé est initié par la transmission d'une requête R_{SIP} au serveur principal 101, par exemple par le réseau IMS 3.

A l'étape 200, le module de gestion 110 du serveur principal 101 reçoit la requête R_{SIP}. Puis, le module de gestion 110 interroge le module de routage 111, comme symbolisé par la flèche 122 sur la figure 2, pour déterminer s'il doit invoquer une application, et si oui laquelle. Lors de cette interrogation, le module de gestion 110 transmet par exemple au module de routage 111 la requête R_{SIP}, ainsi que des informations de contexte, pour indiquer notamment s'il s'agit d'une première requête, ou, dans le cas contraire, quel est l'état de la requête. L'application à invoquer peut être une application hébergée par le serveur principal 101 lui-même, dite application interne, ou une application hébergée par un des serveurs d'applications 2a, 2b, dite application externe.

A l'étape 201, en réponse à cette interrogation, le module de routage 111 transmet des informations de routage au module de gestion 110, comme également symbolisé par la flèche 122. Ces informations peuvent comprendre, en fonction de l'état de la requête, le nom de l'application à invoquer, l'identité de l'abonné pour qui l'application sélectionnée va être invoquée, la zone de routage dans laquelle l'application est mémorisée, une route optionnelle, locale ou distante, un modificateur de route indiquant au module de gestion comment interpréter la route, et/ou des informations d'état optionnelles, conformément à la norme SipServlet JSR289 actuelle.

Les informations transmises comprennent en outre un paramètre de type vrai/faux, appelé drapeau Record-Route. En d'autres termes, le paramètre peut prendre deux valeurs, une valeur « vrai » et une valeur « faux ».

La valeur "vrai" indique qu'un en-tête Record-Route doit être ajouté dans la requête R_{SIP}, c'est-à-dire que les requêtes R_{SIP} suivantes du dialogue doivent passer par le serveur principal 101. La valeur « faux » indique qu'aucun en-tête Record-Route ne doit être ajouté dans la requête R_{SIP}. On notera que l'interface de programmation (API) entre le module de routage 111 et le module de gestion 110 est adaptée pour permettre la transmission de ce paramètre dans la réponse du module de routage 111.

A l'étape 202, le module de gestion 110 reçoit la réponse du module de routage 111. Lorsque la valeur du paramètre est « vrai », le module de gestion 110 ajoute un en-tête Record-Route à la requête R_{SIP}. Lorsque la valeur du paramètre est « faux », le module de gestion 110 n'ajoute pas d'en-tête Record-Route à la requête R_{SIP}.

Après ajout ou non d'un en-tête, selon la valeur du paramètre, le module de gestion 110 transmet la requête R_{SIP} conformément aux instructions de routage reçues du module de routage, par exemple à un serveur d'applications 2a, 2b, ou au coeur de réseau IMS 3.

Le serveur principal 101 permet ainsi, par la collaboration entre le module de gestion 110 et le module de routage 111, une gestion dynamique de la coupure de flux du serveur principal 101. En effet, l'en-tête Record-Route est ajouté de manière dynamique lors de l'enchainement des applications, grâce au fait que la décision est prise par le module de routage 111 lui-même lors de son invocation par le module de gestion 110, et que l'ajout est effectué par le module de gestion 110 sans passage par un module supplémentaire.

En se référant à la figure 4, on décrit maintenant les étapes d'un procédé de mise en communication du premier utilisateur 5a avec le deuxième utilisateur 5b. Le procédé est mis en oeuvre dans un réseau de télécommunication comportant le serveur principal 101.

A l'étape 300, le premier client SIP 4a émet à destination du coeur de réseau IMS 3 une requête R_{SIP}, appelée requête SIP INVITE, comme cela est symbolisé par la flèche 20 sur la figure 2. La requête R_{SIP} comporte divers champs SIP, contenant notamment des informations relatives à l'émetteur 4a, au destinataire 4b, aux codecs utilisés, aux numéros du ou des port(s) associés au service, et/ou aux adresses IP de l'émetteur et du destinataire. La requête R_{SIP} comporte également des informations de routage permettant à la requête R_{SIP} d'arriver au coeur de réseau IMS 3.

A l'étape 301, le coeur de réseau IMS 3 reçoit la requête R_{SIP} et lui ajoute des informations de routage, pour que la requête R_{SIP} passe par le serveur principal et repasse par lui au retour. Puis, le coeur de réseau IMS 3 réémet la requête R_{SIP} à destination du serveur principal 101, comme symbolisé par la flèche 21.

Les étapes 302 à 304 correspondent aux étapes 200 à 202, respectivement.

A l'étape 302, le module de gestion 110 reçoit la requête R_{SIP}. Puis, le module de gestion 110 interroge le module de routage 111.

A l'étape 303, en réponse à cette interrogation, le module de routage 111 transmet des informations de routage au module de gestion 110. Par exemple, l'application à invoquer est hébergée dans le premier serveur d'applications 2a, et la valeur du paramètre est « vrai ».

A l'étape 304, le module de gestion 110 reçoit la réponse du module de routage 111. Puis, comme la valeur du paramètre est « vrai », le module de gestion 110 ajoute un en-tête Record-Route à la requête R_{SIP}. Puis, le module de gestion 110 transmet la requête R_{SIP} au premier serveur d'applications 2a, conformément aux informations transmises par le module de routage 111 à l'étape 303. La transmission de la requête R_{SIP} du module de gestion 110 au premier serveur 2a est symbolisée par la flèche 24.

A l'étape 305, le premier serveur d'applications 2a reçoit la requête R_{SIP}. Puis, le premier serveur 2a traite la requête. Dans le cas d'une application VoIP, le traitement comprend par exemple une première étape de décision de rejet, pour décider si la requête R_{SIP} doit être acceptée ou rejetée. Et, lorsque la requête R_{SIP} est acceptée, le traitement comprend par exemple une deuxième étape de modification du destinataire 4b, dans laquelle la requête R_{SIP} peut être modifiée pour changer des informations relatives au destinataire 4b. Cette étape est par exemple réalisée lorsque le deuxième utilisateur 5b a paramétré un transfert de sa ligne sur une messagerie. Il est bien évident que les étapes de traitement décrites sont données à titre illustratif et ne sont pas limitatives. Lorsque le traitement est terminé, le procédé passe à l'étape 306.

A l'étape 306, le premier serveur d'application 2a émet la requête R_{SIP} traitée à destination du serveur principal 101, comme symbolisé par la flèche 25.

Les étapes 307 à 309 correspondent aux étapes 200 à 202.

A l'étape 307, le module de gestion 110 reçoit la requête R_{SIP}. Puis, le module de gestion 110 interroge le module de routage 111.

A l'étape 308, le module de routage 111 répond au module de gestion 110. On suppose par exemple qu'une application hébergée dans le deuxième serveur d'applications 2b doit être invoquée, et que la valeur du paramètre est « vrai ».

A l'étape 309, le module de gestion 110 reçoit la réponse du module de routage 111, et, conformément aux instructions, ajoute l'en-tête sur la requête R_{SIP}. Puis, le module de gestion 110 transmet la requête R_{SIP} au deuxième module d'applications 2b, comme symbolisé par la flèche 28.

A l'étape 310, le deuxième serveur d'applications 2b reçoit la requête R_{SIP} et la traite. Le traitement est de préférence complémentaire au traitement réalisé par le premier serveur d'applications. Le traitement comprend par exemple la génération d'un appel supplémentaire pour avertir le deuxième utilisateur 5b, sur un autre terminal lui appartenant, qu'il reçoit un appel du premier utilisateur 5a sur son terminal 4b. Lorsque le traitement est terminé, le procédé passe à l'étape 311.

A l'étape 311, le deuxième serveur d'application 2b transmet la requête R_{SIP} traitée au serveur principal 101, comme symbolisé par la flèche 27.

On notera que, si la valeur du paramètre transmis à l'étape 9 avait été « faux », l'en-tête Record-Route n'aurait pas été ajoutée avant la transmission de la requête R_{SIP} par le module de gestion 110, et, en conséquence, le serveur principal ne serait pas en coupure des flux après l'établissement de la session d'appel.

Les étapes 312 à 314 correspondent aux étapes 200 à 202, respectivement.

A l'étape 312, le module de gestion 110 reçoit la requête R_{SIP}. Puis, le module de gestion 110 interroge le module de routage 111.

A l'étape 313, le module de routage 111 répond au module de gestion 110. On suppose par exemple qu'il ne reste pas d'application à invoquer, et que la valeur du paramètre est « vrai ».

A l'étape 314, le module de gestion 110 ajoute l'en-tête, puis, comme il ne reste pas d'application à invoquer, émet la requête R_{SIP} à destination du coeur de réseau IMS 3, comme cela est symbolisé par la flèche 28.

A l'étape 315, le coeur de réseau IMS 3 transmet la requête R_{SIP} à destination du deuxième client SIP 4b, comme cela est symbolisé par la flèche 29.

La communication est ainsi établie entre les premier et deuxième clients SIP 4a, 4b, et les premier et deuxième utilisateurs 5a, 5b peuvent dialoguer via leurs téléphones mobiles respectifs.

Bien entendu, la présente invention ne se limite pas aux formes de réalisation décrites ci- avant à titre d'exemples ; elle s'étend à d'autres variantes.

En particulier, l'ajout d'un en-tête peut être réalisé dans une requête de signalisation autre qu'une requête SIP.

Le procédé d'ajout d'un en-tête peut notamment être utilisé par des industriels pour le développement de fonctions de proxy, par exemple la fonction de gestion des interactions de service (SCIM), ou la fonction de proxy CSCF, ou toute autre fonction de proxy comprenant un routage vers des serveurs tiers dans l'IMS.

## Revendications

1. Procédé de traitement de données de télécommunication, dans lequel un serveur (101) d'un réseau de télécommunication ajoute un en-tête dans une requête de signalisation (R_{SIP}), pour la transmission de ladite requête de signalisation sur ledit réseau de télécommunication, ledit serveur (101) comportant un module de routage (111), apte à déterminer des informations de routage relatives à des requêtes de signalisation, et un module de gestion (110), apte à interroger le module de routage (111) et à distribuer des requêtes de signalisation (R_{SIP}) en fonction d'instructions reçues par le module de routage (111), **caractérisé en ce qu'**il comprend des étapes :
a) recevoir, dans le module de gestion (110), une requête de signalisation (R_{SIP}) provenant du réseau de télécommunication,
b) déterminer, dans le module de routage, si un en-tête doit être ajouté dans la requête de signalisation, en fonction d'un critère prédéterminé auprès dudit module de routage (111), et, si un en-tête doit être ajouté,
c) mettre en oeuvre, dans le module de gestion, un ajout dynamique de l'en-tête dans la requête de signalisation.

2. Procédé selon la revendication 1, **caractérisé en ce que** l'étape a) comprend une opération d'interrogation du module de routage (111) par le module de gestion, suite à la réception de la requête de signalisation, l'étape b) comprenant une opération de réponse du module de routage (111) au module de gestion (110), la réponse comportant une information relative au fait qu'un en-tête doit être ajouté ou non à la requête de signalisation (R_{SIP}).

3. Procédé selon la revendication 2, **caractérisé en ce que** les informations transmises au module de routage (111) lors de l'interrogation comprennent la requête de signalisation (R_{SIP}), ainsi que des informations de contexte, telles que l'état de la requête de signalisation.

4. Procédé selon la revendication 2, **caractérisé en ce que** la réponse du module de routage (111) au module de gestion (110) comprend, outre l'information relative au fait qu'un en-tête doit être ajouté ou non à la requête de signalisation (R_{SIP}), des informations de routage.

5. Procédé selon la revendication 4, **caractérisé en ce que** l'information relative au fait qu'un en-tête doit être ajouté ou non à la requête de signalisation (R_{SIP}) comprend un paramètre pouvant prendre deux valeurs, une première valeur indiquant qu'un en-tête doit être ajouté dans la requête de signalisation (R_{SIP}), et une deuxième valeur indiquant qu'aucun en-tête ne doit être ajouté dans la requête de signalisation (R_{SIP}).

6. Procédé selon la revendication 5, **caractérisé en ce que** l'étape c) est réalisée lorsque la valeur du paramètre transmis par le module de routage à l'étape b) est la première valeur.

7. Procédé selon la revendication 6, **caractérisé en ce que**, après l'étape c), le module de gestion (110) transmet la requête de signalisation (R_{SIP}) conformément aux instructions de routage reçues du module de routage (111).

8. Procédé selon la revendication 1, **caractérisé en ce que** l'en-tête ajouté est de type Record-Route, la requête de signalisation (R_{SIP}) étant de type SIP INVITE.

9. Programme informatique comportant des instructions pour la mise en oeuvre d'un procédé selon l'une quelconque des revendications 1 à 8 lorsqu'il est exécuté par un processeur.

10. Serveur apte à ajouter un en-tête dans une requête de signalisation (R_{SIP}) pour la transmission de ladite requête de signalisation sur un réseau de télécommunication comprenant ledit serveur, ledit serveur (101) comportant un module de routage (111), apte à déterminer des informations de routage relatives à des requêtes de signalisation, et un module de gestion (110), apte à interroger le module de routage (111) et à distribuer des requêtes de signalisation (R_{SIP}) en fonction d'instructions reçues par le module de routage (111), **caractérisé en ce qu'**il comprend :
- des moyens de réception pour recevoir, dans le module de gestion (110), une requête de signalisation (R_{SIP}) provenant du réseau de télécommunication,
- des moyens de détermination pour déterminer, dans le module de routage, si un en-tête doit être ajouté dans la requête de signalisation, en fonction d'un critère prédéterminé auprès dudit module de routage (111), et
- des moyens d'ajout d'un en-tête pour mettre en oeuvre, dans le module de gestion, un ajout dynamique de l'en-tête dans la requête de signalisation.

11. Système comportant un serveur selon la revendication 10, dit serveur principal, et un ensemble de serveurs supplémentaires, dit serveurs d'applications, lesdits serveurs d'applications étant connectés au serveur principal.
